# EUROPEAN PATENT APPLICATION

(11) **EP 3 855 589 A1**
(43) Date of publication of application: **28.07.2021**
(21) Application number: 20153678.6
(22) Date of filing: 24.01.2020
(51) Int. Cl.: H02G 3/06, H01R 9/05, H02G 15/013

(54) **CLAMPING APPARATUS FOR CABLE GLAND AND CABLE GLAND INCORPORATING SUCH CLAMPING APPARATUS**

(71) Applicant: CMP Products Limited, Northumberland NE23 1WH (GB)
(72) Inventor: The designation of the inventor has not yet been filed
(74) Representative: Vinsome, Rex Martin

(57) **Abstract**

A clamping apparatus (26) for clamping an armour layer of a cable is disclosed. The clamping apparatus comprises a first part (28) defining a first aperture (32) for receiving one or more elongate cores of a cable and defining a first surface (34) for engaging an armour layer of the cable. A second part (36) comprises an annular body part and an insert (37) adapted to be located in the annular body part, wherein the second part defines a second aperture for receiving the elongate core and the armour layer and defines a second surface (40) for engaging the armour layer. The first and second parts are adapted to clamp the armour layer therebetween such that said first and second surfaces engage the armour layer, and at least part of said second part is deformable in response to clamping of the armour layer between the first and second parts.

## Description

The present disclosure relates to a clamping apparatus for clamping an armour layer of a cable, and relates particularly, but not exclusively, to a clamping apparatus for clamping an armour layer of a cable in a cable gland. The disclosure also relates to a cable gland incorporating such a clamping apparatus.

Cable glands provide a mechanical connection between a cable and an installation, such as a junction box. The connection may have to satisfy one or more physical requirements, such as the ability to resist pulling forces experienced by the cable, to maintain continuity of electrical connection, or to prevent the ingress of water from the surrounding environment, or the force of an explosion.

A cable may include an integrated layer of armour for providing mechanical strength to the cable and for preventing damage to the inner layers and wires of the cable. The armour layer may for example be single wire armour, braid or screen.

Cable armour is metallic and it is therefore often necessary for electrical safety to provide a secure connection between the armour and earth when the cable is installed in the cable gland. Therefore, in addition to providing a secure mechanical connection between the installation and the cable, the cable gland must maintain a reliable electrical connection between the armour of the cable and earth.

This is usually achieved by means of a clamping device arranged in the cable gland housing. The clamping device has an inner part known as a cone and an outer part known as a clamping ring, and the cable armour is clamped between the cone and the clamping ring and held in the clamped position by the cable gland housing. Different armour types have different physical characteristics. For example, single wire armour comprises wires which are thick and stiff, while braid comprises a large number of finer wires. In order to provide a sufficiently secure mechanical and electrical connection, the clamping device of the cable gland must be chosen so it closely matches the physical dimensions of the armour of the cable being clamped.

Clamping devices for cable glands are known in which a pair of cones of different sizes is provided, wherein the cone of one size is used for braid, and the cone of the other size is used for single wire armour. Alternatively, a double cone can be provided, wherein one end of the cone is suitably sized for braid and the other end of the cone is suitable sized for single wire armour, and the double cone is reversibly arranged in a cable gland, the orientation of the double cone depending on the type of armour to be clamped. However, because two cones are usually provided when a cable gland assembly is supplied, there is a possibility of choosing the inappropriately sized cone for a particular cable armour type, which means that when installed, the mechanical or electrical connection has an increased risk of failure.

Cable clamping devices are also known in which a tapering gap is formed between the cone and the clamping ring. The cable armour layer is held in a clamped condition in the tapering gap, but the position of the cone and the clamping ring relative to each other varies, depending on whether braid or single wire armour is being clamped. This in turn means that the position of the two mutually engaging cable gland housing parts relative to each other also varies with the type of cable armour being clamped, as a result of which it is difficult to determine whether a reliable clamping connection has been made.

Preferred embodiments of the present disclosure seek to overcome one or more of the above disadvantages of the prior art. According to an aspect of the present disclosure, there is provided a clamping apparatus for clamping an armour layer of a cable, the clamping apparatus comprising:
a first part defining a first aperture for receiving one or more elongate cores of a cable and defining a first surface for engaging an armour layer of the cable; and
a second part comprising an annular body part and at least one insert adapted to be at least partially located in said annular body part, wherein the second part defines a second aperture for receiving the or each elongate core and said armour layer and defines a second surface for engaging the armour layer;
wherein the first and second parts are adapted to clamp the armour layer therebetween such that said first and second surfaces engage the armour layer, and wherein at least part of said second part is deformable in response to clamping of the armour layer between said first and second parts.

This provides the advantage of enabling the clamping apparatus to reliably clamp armour of a range of thicknesses using a single clamping apparatus. Also, by providing a deformable second part, the overall length of the clamping apparatus can be kept constant, which enables the relative position of two cable gland housing parts accommodating the clamping apparatus to also be kept constant. This in turn enables a necessary clamping torque to be more reliably applied to the clamping apparatus and to be more reliably identified by a user of the cable gland. In addition, by providing a second part comprising an annular body part and at least one insert adapted to be at least partially located in said annular body part, this provides the advantage of enabling the deformability of the second part to be adjusted, while also further increasing the range of thicknesses of armour that can be clamped by enabling the second component to be omitted from the clamping apparatus.

At least part of said second part may be deformable by means of resilience.

This provides the advantage of enabling parts of a cable gland to be dismantled and reused.

The first component may comprise an annular body part and at least one said second component may comprise a respective insert adapted to be at least partially located in said annular body part.

The second part may be adapted to engage the first part in more than one orientation.

According to a second aspect of the present disclosure, there is provided a cable gland assembly comprising:
at least one first body part;
at least one second body part adapted to engage the first body part to define an internal space for enabling at least part of a cable to extend through the internal space; and
at least one clamping apparatus as defined above.

The first body part may be adapted to engage the second body part by means of rotation of one of said first and second body parts relative to the other of said first and second body parts.

This provides the advantage of enabling a predetermined clamping torque to be reliably indicated by means of a constant axial length of the assembled clamping apparatus.

The first and second body parts may be adapted to engage each other by means of screw threads on said first and second body parts.

A preferred embodiment of the disclosure will now be described, by way of example only and not in any limitative sense, with reference to the accompanying drawings, in which:-
Figure 1 is a cross-sectional side view of a cable gland embodying the present disclosure;
Figure 2 is a detailed cross-sectional view of a clamping apparatus of the cable gland of Figure 1 clamping an armour layer of a first thickness; and
Figure 3 is a cross-sectional view of the clamping apparatus of the cable gland of Figure 1 clamping an armour layer of a second thickness.

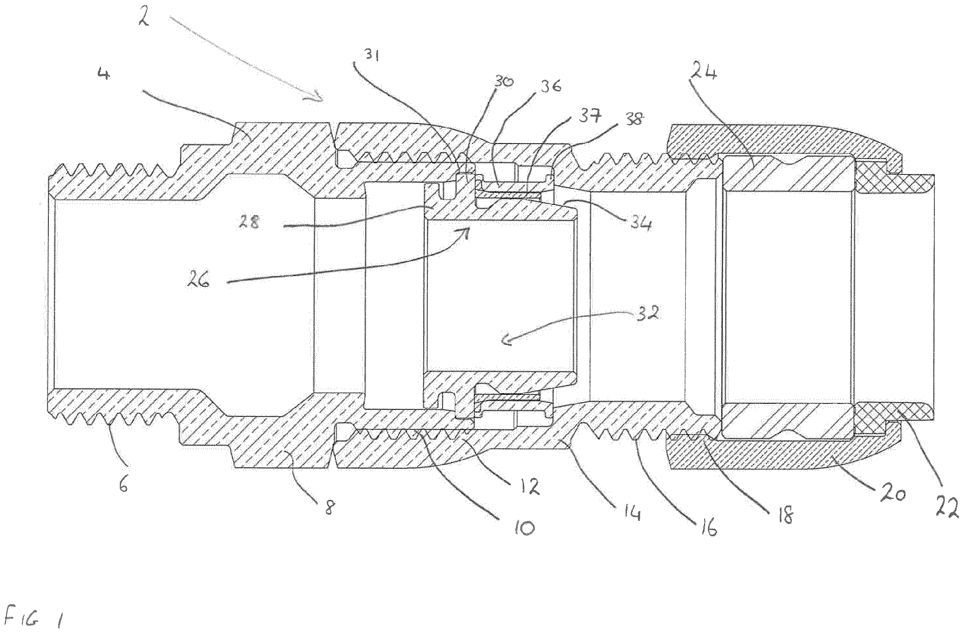

Referring to Figure 1, a cable gland 2 has a first body part in the form of an entry item 4 having a first external screw thread 6 for engaging an aperture (not shown) on an enclosure or a locking nut (not shown) on an enclosure. The entry item 4 also has a flange 8 for enabling rotation of the entry item 4 by means of a tool, and a second external screw thread 10 for engagement with a first internal screw thread 12 of a second body part 14. The second body part 14 also has an external screw thread 16 for engaging an internal screw thread 18 of a third body part 20. The third body part 20 and a ferrule 22 secure an axially compressible seal 24 in position in the cable gland 2.

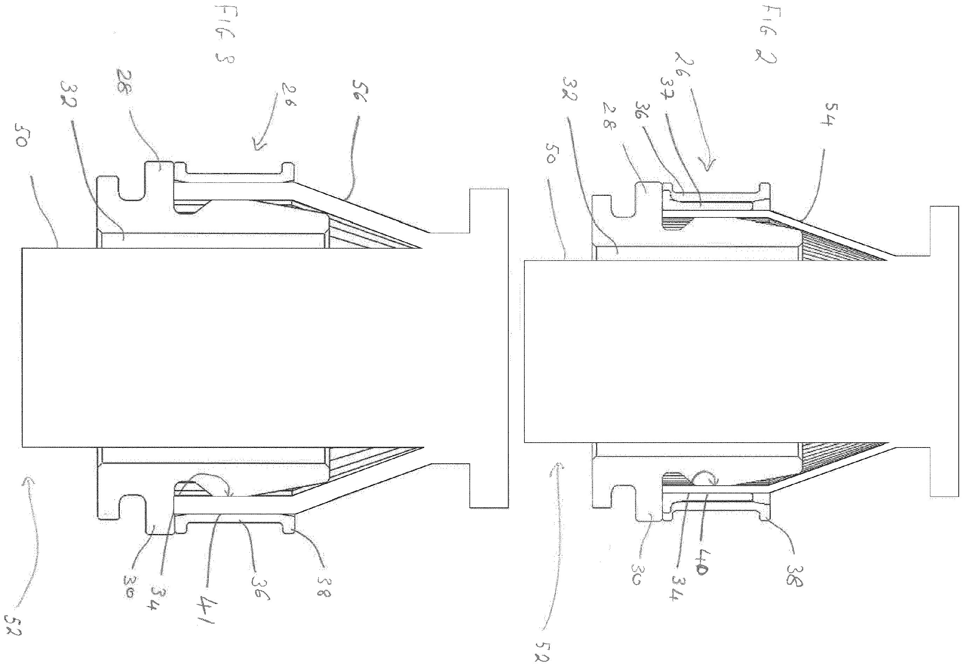

A clamping apparatus 26 comprises a first part 28 adapted to be received in the entry item 4 and having a flange 30 for abutment with a recess 31 in an end portion of the entry item 4. The first part 28 defines an aperture 32 for receiving one or more cores 50 of a cable 52 (Figures 2 and 3) and defines a first clamping surface 34 having a tapering surface for engaging an earthing sheath 54, 56 of the cable 52. The first part 28 has a generally circular cross section in a direction transverse to its longitudinal axis.

A second part in the form of a clamping sleeve 36 having a removable insert 37 is adapted to be received in the second body part 14, and has a flange 38 for abutting the second body part 14. The clamping sleeve 36 is adapted to abut the flange 30 of the first clamping part 28, and defines a second clamping surface 40, 41 (Figures 2 and 3) for engaging the armour layer 54, 56 respectively of the cable 52, as described in more detail below. The clamping sleeve 36 has a generally circular internal cross section in a direction transverse to its longitudinal axis.

Referring to Figure 2, which shows the clamping apparatus 26 clamping a thin armour layer 54 such as a mesh, braid or screen, the clamping sleeve 36 and/or the removable insert 37 is made of deformable material such as a malleable metal or alloy so that the gap between the first clamping surface 34 and the second clamping surface 40 can expand to closely clamp the armour layer 54 between the first part 28 and the insert 37.

Figure 3 shows the clamping apparatus 26 clamping a thick armour layer 56 such as a single wire layer, wherein the insert 37 is omitted from the clamping apparatus 26. The clamping sleeve 36 is made of deformable material such as a malleable metal or alloy so that the gap between the first clamping surface 34 and the second clamping surface 41 can expand to closely clamp the armour layer 56 between the first part 28 and the clamping sleeve 36.

The operation of the cable gland 2 will now be described.

The cable 52 is prepared for insertion into the cable gland 2 by removal of part of an outer layer (not shown) and armour layer 54, 56 to expose the cores 50 of the cable 52 and the armour layer 54, 56. The first part 28 is located in the entry item 4 and the exposed cores 50 of the cable 52 are inserted through the aperture 32 of the first part 28 and the armour layer 54, 56 is arranged outwardly of the first clamping surface 34 on the first part 28. The second part of the clamping apparatus 26 is then located in the second body part 14, and the second body part 14 is mounted to the entry item 4 by means of mutual engagement of the screw threads 10, 12 on the entry item 4 and second body part 14 respectively. As the screw threads 10, 12 are brought into engagement with each other, the armour layer 54, 56 is clamped between the first clamping portion 34 on the first part 28 and the second clamping surface 40 on the insert 37, or the second clamping surface 41 on the clamping sleeve 36, respectively, until the clamping sleeve 36 abuts the second body part 14 and the flange 30 of the first part 28, and the flange 30 of the first part 28 abuts the end 31 of the entry item 4.

At the same time, an end face 44 of the second body part 14 abuts the flange 8 of the entry item 4. In this way, it can be determined that the assembled clamping apparatus 26 has reached its minimum axial length, and that the armour layer 54, 56 of the cable 52 has therefore been securely clamped between the first clamping surface 34 and the second clamping surface 40, 41 respectively. The third body part 20 then engages the second body part 18 by means of the screw threads 16, 18 on the second body part 14 and third body part 20 respectively, which causes axial compression of the seal 24 between the ferrule 22 and end face 46 of the second body part 14. This in turn causes inward radial expansion of the seal 24, which brings the seal into sealing engagement with an external surface of the cable 52.

It will be appreciated by persons skilled in the art that the above embodiment has been described by way of example only, and not in any limitative sense, and that various alterations and modifications are possible without departure from the scope of the disclosure as defined by the appended claims.

## Claims

1. A clamping apparatus for clamping an armour layer of a cable, the clamping apparatus comprising:
a first part defining a first aperture for receiving one or more elongate cores of a cable and defining a first surface for engaging an armour layer of the cable; and
a second part comprising an annular body part and at least one insert adapted to be at least partially located in said annular body part, wherein the second part defines a second aperture for receiving the or each elongate core and said armour layer and
defines a second surface for engaging the armour layer;
wherein the first and second parts are adapted to clamp the armour layer therebetween such that said first and second surfaces engage the armour layer, and wherein at least part of said second part is deformable in response to clamping of the armour layer between said first and second parts.

2. An apparatus according to claim 1, wherein at least part of said second part is deformable by means of resilience.

3. An apparatus according to any one of the preceding claims, wherein the second part is adapted to engage the first part in more than one orientation.

4. A cable gland assembly comprising:
at least one first body part;
at least one second body part adapted to engage the first body part to define an internal space for enabling at least part of a cable to extend through the internal space; and
at least one clamping apparatus according to any one of the preceding claims.

5. An assembly according to claim 4, wherein the first body part is adapted to engage the second body part by means of rotation of one of said first and second body parts relative to the other of said first and second body parts.

6. An assembly according to claim 5, wherein the first and second body parts are adapted to engage each other by means of screw threads on said first and second body parts.
